# EUROPEAN PATENT APPLICATION

(11) **EP 4 664 024 A1**
(43) Date of publication of application: **17.12.2025**
(21) Application number: 23921329.1
(22) Date of filing: 01.12.2023
(51) Int. Cl.: F24F 7/013, F24F 7/007, F24F 13/02, F24F 13/14, F24F 13/15, F28D 20/02

(54) **HEAT EXCHANGER AND TOTAL HEAT EXCHANGE VENTILATION SYSTEM**

(30) Priority: 08.02.2023 JP 2023017213
(71) Applicant: Sharp Kabushiki Kaisha, Sakai City, Osaka 590-8522 (JP)
(72) Inventor: HAMADA Hiroka, Sakai City, Osaka 590-8522 (JP); KANNO Toru, Sakai City, Osaka 590-8522 (JP); IDE Tetsuya, Sakai City, Osaka 590-8522 (JP); KAMADA Tsuyoshi, Sakai City, Osaka 590-8522 (JP)
(74) Representative: Müller Hoffmann & Partner
(86) International application number: PCT/JP2023/043064
(87) International publication number: WO 2024/166509

(57) **Abstract**

There is provided a heat exchanger including an axial flow fan configured to switch a direction of an air flow to an opposite side, a heat exchange element aligned with the axial flow fan in the direction of the air flow, a pair of flow conditioning portions provided on both sides of the heat exchange element in the direction of the air flow, and a pipe having a tubular shape extending in the direction of the air flow, the pipe accommodating the axial flow fan, the heat exchange element, and the pair of flow conditioning portions, wherein each of the pair of flow conditioning portions includes a flow conditioning plate configured to be displaceable and thus to change an orientation, and is configured to condition the air flow according to the orientation of the flow conditioning plate.

## Description

### Technical Field

The disclosure relates to a heat exchanger and a total heat exchange ventilation system. The present application claims priority to JP 2023-17213 filed in Japan on Feb. 8, 2023, of which contents are incorporated herein by reference.

### Background Art

A heat storage element capable of storing heat up to a predetermined temperature while absorbing heat and moisture from gas and a ventilation unit using the heat storage element are known (for example, see PTL 1). In PTL 1, two ventilation units each perform air supply and exhaust. In each ventilation unit, a rotational direction of a ventilation fan during air supply and a rotational direction of the ventilation fan during air exhaust are switched to opposite directions to each other.

In the ventilation unit during air exhaust, indoor air is sucked therein and supplied to the heat storage element by rotation of the ventilation fan, and the air having passed through the heat storage element is discharged to the outside of the building. In the ventilation unit during air supply, outdoor air is sucked through the heat storage element by rotation of the ventilation fan, and the air having passed through the heat storage element is supplied into the room. The heat storage element absorbs heat and moisture contained in the air passing through the heat storage element and stores the heat and moisture up to a predetermined value.

### Citation List

### Patent Literature

PTL 1: JP 2013-113463 A

### Summary of Invention

### Technical Problem

When the ventilation fan is an axial flow fan, the following non-uniformity of wind velocity distribution (unevenness in wind velocity) occurs in the heat storage element during air supply and exhaust by the ventilation fan. For example, in a case where the ventilation fan sucks air from the heat storage element during air exhaust, when a wind velocity of indoor air flowing into the heat storage element is measured, a wind velocity on an axial side of the ventilation fan (at a central portion of the heat storage element) is relatively high, and a wind velocity on an outer peripheral end side of the ventilation fan (at an outer side portion of the heat storage element) is relatively low. On the other hand, for example, in a case where the ventilation fan supplies air to the heat storage element during air supply, when a wind velocity of outdoor air flowing out from the heat storage element is measured, a wind velocity on the axial side of the ventilation fan (on an inner side of the heat storage element) is relatively low, and a wind velocity on the outer peripheral end side of the ventilation fan (on an outer side of the heat storage element) is relatively high.

Therefore, during air exhaust, an air flow rate is large at the outer side portion of the heat storage element where the wind velocity is relatively high, and an air flow rate is small at the central portion of the heat storage element where the wind velocity is relatively low. On the other hand, during air supply, an air flow rate is large at the central portion of the heat storage element and an air flow rate is small at the outer side portion of the heat storage element. Such unevenness in wind velocity may reduce exchange efficiency of latent heat (humidity) in the heat storage element. In particular, in a ductless type heat exchanger in which a distance between the axial flow fan and the heat storage element is small, unevenness in wind velocity is likely to occur.

For example, when high-temperature and high-humidity outdoor air is supplied, most of the outdoor air flows through the outer side portion of the heat storage element and is unlikely to flow through the central portion of the heat storage element, so that a large amount of moisture is absorbed in the outer side portion of the heat storage element. Thereafter, when the low-temperature and low-humidity indoor air is discharged, most of the indoor air flows through the central portion of the heat storage element and is unlikely to flow through the outer side portion of the heat storage element, so that moisture is unlikely to be released in the outer side portion of the heat storage element. Then, since only moisture absorption is performed in the outer side portion of the heat storage element and moisture release is not performed, dew condensation may be caused.

An object of one aspect of the disclosure is to provide a heat exchanger and a total heat exchange ventilation system that are capable of suppressing a decrease in exchange efficiency of latent heat (humidity) in a heat exchange element.

### Solution to Problem

According to an aspect of the disclosure, there is provided a heat exchanger including an axial flow fan configured to switch a direction of an air flow to an opposite side, a heat exchange element aligned with the axial flow fan in the direction of the air flow, a pair of flow conditioning portions provided on both sides of the heat exchange element in the direction of the air flow, and a pipe having a tubular shape extending in the direction of the air flow, the pipe accommodating the axial flow fan, the heat exchange element, and the pair of flow conditioning portions, wherein each of the pair of flow conditioning portions includes a flow conditioning plate configured to be displaceable and thus to change an orientation, and is configured to condition the air flow according to the orientation of the flow conditioning plate.

According to an aspect of the disclosure, there is provided a total heat exchange ventilation system including the heat exchanger in a space, wherein the heat exchanger includes a first heat exchanger and a second heat exchanger, and when the first heat exchanger performs air supply to the space, the second heat exchanger performs air exhaust from the space, and the air supply and the air exhaust are switched in conjunction with each other.

### Brief Description of Drawings

FIG. 1 is an overall configuration diagram of a total heat exchange ventilation system.
FIG. 2 is a perspective view of a heat exchanger according to a first embodiment.
FIG. 3 is a vertical cross-sectional view of the heat exchanger according to the first embodiment when the heat exchanger is viewed in an X direction.
FIG. 4A is a vertical cross-sectional view illustrating the heat exchanger in an air supply mode according to the first embodiment.
FIG. 4B is a perspective view of a first flow conditioning portion in the air supply mode according to the first embodiment.
FIG. 4C is a perspective view of a second flow conditioning portion in the air supply mode according to the first embodiment.
FIG. 5 is a view for describing a driving mechanism of a flow conditioning plate according to the first embodiment.
FIG. 6A is a vertical cross-sectional view illustrating the heat exchanger in an air exhaust mode according to the first embodiment.
FIG. 6B is a perspective view of the second flow conditioning portion in the air exhaust mode according to the first embodiment.
FIG. 6C is a perspective view of the first flow conditioning portion in the air exhaust mode according to the first embodiment.
FIG. 7A is a perspective view of a first flow conditioning portion in an air supply mode according to a second embodiment.
FIG. 7B is a perspective view of a second flow conditioning portion in the air supply mode according to the second embodiment.
FIG. 8A is a perspective view of a second flow conditioning portion in an air exhaust mode according to the second embodiment.
FIG. 8B is a perspective view of a first flow conditioning portion in the air exhaust mode according to the second embodiment.
FIG. 9 is a perspective view of a first flow conditioning portion according to a first modification.
FIG. 10A is a perspective view of a first flow conditioning portion in an air supply mode according to a second modification.
FIG. 10B is a perspective view of the first flow conditioning portion in an air exhaust mode according to the second modification.
FIG. 11A is a plan view of a horizontal flow conditioning plate according to the second embodiment.
FIG. 11B is a perspective view of the horizontal flow conditioning plate according to the second embodiment.
FIG. 12 is a horizontal cross-sectional view illustrating a heat exchanger in an air supply mode according to a third embodiment.
FIG. 13 is a horizontal cross-sectional view illustrating the heat exchanger in an air exhaust mode according to the third embodiment.
FIG. 14A is a perspective view of a first flow conditioning portion in an air supply mode according to a fourth embodiment.
FIG. 14B is a perspective view of a second flow conditioning portion in the air supply mode according to the fourth embodiment.
FIG. 15A is a perspective view of the second flow conditioning portion in an air exhaust mode according to the fourth embodiment.
FIG. 15B is a perspective view of the first flow conditioning portion in the air exhaust mode according to the fourth embodiment.
FIG. 16 is a perspective view of a flow conditioning plate according to a third modification.

### Description of Embodiments

Embodiments of the disclosure will be described below with reference to the drawings. In the drawings, identical or equivalent elements are given the same reference signs, and redundant descriptions thereof are omitted.

### First Embodiment

### Total Heat Exchange Ventilation System 1

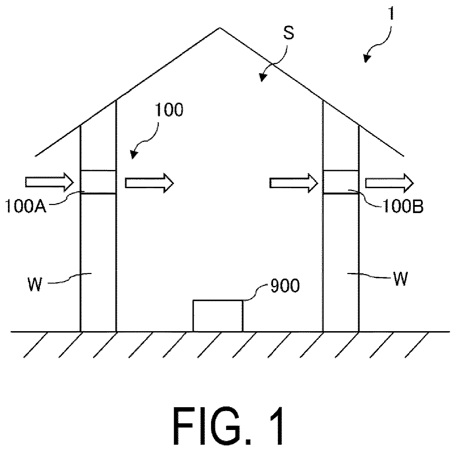

FIG. 1 is an overall configuration diagram of a total heat exchange ventilation system 1. As illustrated in FIG. 1, the total heat exchange ventilation system 1 includes heat exchangers 100 and a control device 900. The heat exchanger 100 is installed in a hole penetrating a wall W of a building such as a building or a house, and exchanges sensible heat (temperature) and latent heat (humidity) between supply air from the outside of the building and exhaust air from the inside of the room, suppressing changes in temperature and humidity in the room during ventilation.

The control device 900 is a computer connected to the heat exchanger 100 in a wired or wireless manner and configured to control driving of the heat exchanger 100, and includes a processor such as a CPU. The control device 900 may include a Micro Control Unit (MCU) or a Micro Processor Unit (MPU), or may include a Field Programmable Gate Array (FPGA), an Application Specific Integrated Circuit (ASIC), or other arithmetic functions.

The total heat exchange ventilation system 1 of the present example includes a plurality of (two in the example of FIG. 1) heat exchangers 100. The plurality of heat exchangers 100 are provided in a room (space S) of a building. The plurality of heat exchangers 100 include a first heat exchanger 100A and a second heat exchanger 100B. The first heat exchanger 100A may be one heat exchanger 100 or may be a plurality of heat exchangers 100. The second heat exchanger 100B may be one heat exchanger 100 or may be a plurality of heat exchangers 100.

The control device 900 drives and controls the respective heat exchangers 100 such that the second heat exchanger 100B exhausts air from the space S when the first heat exchanger 100A supplies air to the space S. Further, the control device 900 drives and controls the respective heat exchangers 100 such that the air supply and exhaust described above are switched in conjunction with each other. To be more specific, at a predetermined timing, the control device 900 switches an operation mode of the first heat exchanger 100A between an air supply mode and an air exhaust mode, and switches an operation mode of the second heat exchanger 100B between the air exhaust mode and the air supply mode.

Thus, when one of the first heat exchanger 100A and the second heat exchanger 100B is in the air supply mode and the other is in the air exhaust mode, the space S is ventilated. At this time, in each of the first heat exchanger 100A and the second heat exchanger 100B, heat and moisture are absorbed through total heat exchange with air in one mode of the air supply mode and the air exhaust mode, and heat discharge and moisture release are performed through total heat exchange with air in the other mode. As a result, changes in temperature and humidity of the space S during ventilation are suppressed.

### Overall Structure of Heat Exchanger 100

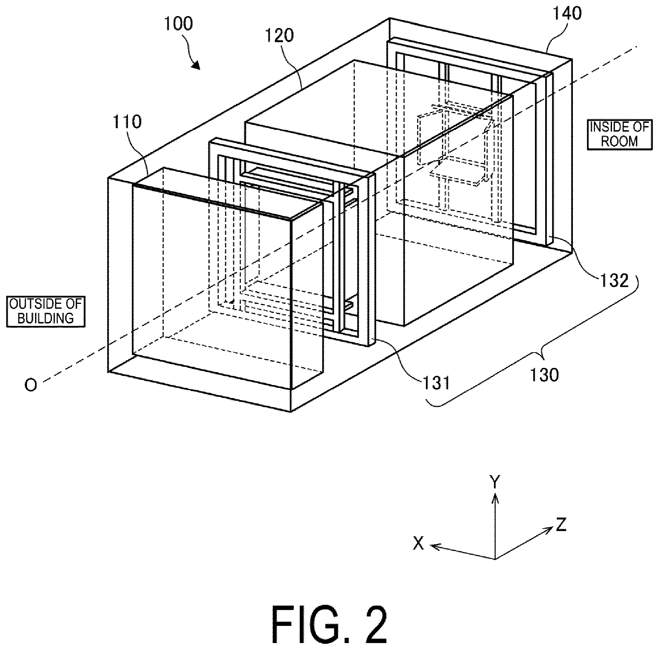

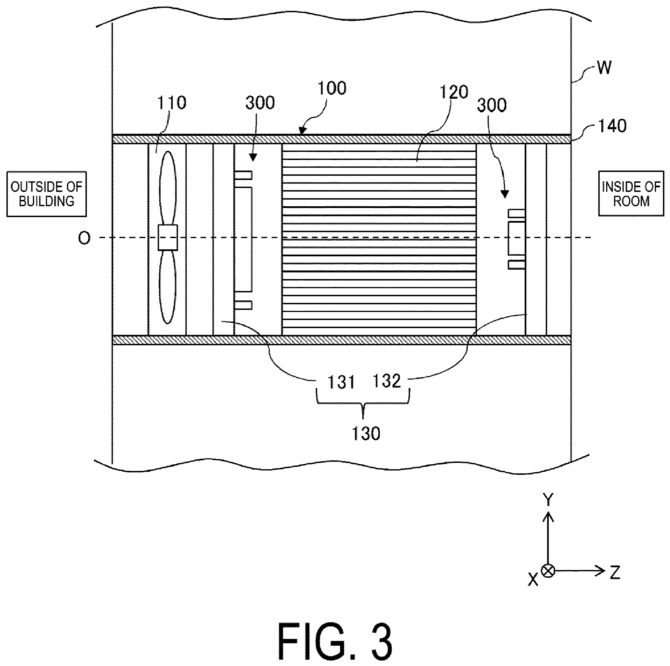

FIG. 2 is a perspective view of the heat exchanger 100 according to the first embodiment. FIG. 3 is a vertical cross-sectional view of the heat exchanger 100 according to the first embodiment when the heat exchanger 100 is viewed in an X direction. The heat exchanger 100 is a ductless type heat exchanger including an axial flow fan 110, a heat exchange element 120, a pair of flow conditioning portions 130, and a pipe 140.

When the axial flow fan 110 rotates, an air flow is generated along an axis O passing through a rotation center of the axial flow fan 110. The axial flow fan 110 is a reversible flow fan capable of switching a direction of an air flow to the opposite side by reversing a rotational direction of the axial flow fan 110. The heat exchange element 120 is a heat medium having a function of exchanging total heat (sensible heat and latent heat), and is aligned with the axial flow fan 110 in the direction of the air flow. The pair of flow conditioning portions 130 are members for adjusting the direction of the air flow, and are provided on both sides of the heat exchange element 120 in the direction of the air flow.

The pipe 140 is a tubular body extending in the direction of the air flow, and accommodates the axial flow fan 110, the heat exchange element 120, and the pair of flow conditioning portions 130. Hereinafter, a direction in which the hole penetrates the wall W is referred to as a Z direction. The pipe 140 is fitted into the hole of the wall W without a gap such that an axial direction thereof extends in the Z direction. When the pipe 140 is viewed from the Z direction, an opening of the pipe 140 spreads in a horizontal direction (X direction) and a vertical direction (Y direction). Openings on both ends of the pipe 140 face the inside of the room and the outside of the building. In the present example, the pipe 140 has a rectangular tubular shape, but may have another tubular shape (for example, a cylindrical shape or a triangular tubular shape) that fits the hole of the wall W.

The pair of flow conditioning portions 130 are constituted by a first flow conditioning portion 131 and a second flow conditioning portion 132. In the pipe 140, the axial flow fan 110, the first flow conditioning portion 131, the heat exchange element 120, and the second flow conditioning portion 132 are arranged in this order from the outside of the building to the inside of the room. When the axial flow fan 110 rotates, an air flow in the Z direction is generated in the pipe 140. The axis O of the axial flow fan 110 substantially coincides with a cross-sectional center line of the pipe 140, and extends in the Z direction so as to pass through cross-sectional centers of the pair of flow conditioning portions 130 and the heat exchange element 120. Note that in the pipe 140, the axial flow fan 110, the first flow conditioning portion 131, the heat exchange element 120, and the second flow conditioning portion 132 may be arranged in this order from the inside of the room to the outside of the building.

In the air supply mode of the heat exchanger 100, the control device 900 causes the axial flow fan 110 to rotate in a normal direction, thereby generating an air flow from the outside of the building to the inside of the room (an air flow toward a downstream side in the Z direction). The outdoor air blown from the axial flow fan 110 is supplied to the heat exchange element 120 through the first flow conditioning portion 131. At this time, the heat exchange element 120 performs total heat exchange with the outdoor air passing therethrough. The outdoor air that has passed through the heat exchange element 120 flows into the room through the second flow conditioning portion 132.

In the air exhaust mode of the heat exchanger 100, the control device 900 causes the axial flow fan 110 to rotate in a reverse direction, thereby generating an air flow from the inside of the room to the outside of the building (an air flow toward an upstream side in the Z direction). The indoor air sucked by the axial flow fan 110 flows into the heat exchange element 120 through the second flow conditioning portion 132. At this time, the heat exchange element 120 performs total heat exchange with the indoor air passing therethrough. The indoor air that has passed through the heat exchange element 120 is discharged to the outside of the building through the first flow conditioning portion 131 and the axial flow fan 110.

### Heat Exchange Element 120

The heat exchange element 120 has a structure in which a heat storage base material supports a humidity control material. The humidity control material has a characteristic of absorbing moisture when an ambient humidity is relatively high relative to an equilibrium humidity of the humidity control material itself and releasing moisture when the ambient humidity is relatively low. Unlike a desiccant typified by silica gel, the humidity control material can repeatedly absorb and release moisture, and thus can exhibit its effect semipermanently in principle.

The humidity control material of the present example contains a water-absorbent resin and a humidity control component (humidity control liquid) impregnated into the water-absorbent resin. The water-absorbent resin may be an ionic resin or a non-ionic resin. Specific examples of the ionic resin include an alkali metal salt of polyacrylic acid and a starch-acrylic acid salt graft polymer. Specific examples of the alkali metal salt of polyacrylic acid include sodium polyacrylate. Specific examples of the non-ionic resin include a vinyl acetate copolymer, a maleic anhydride copolymer, polyvinyl alcohol, and polyalkylene oxide.

The humidity control component preferably contains at least one selected from the group consisting of a deliquescent substance that absorbs moisture in the air to deliquesce and polyhydric alcohol. In this way, a humidity control effect can be further enhanced.

Specific examples of the polyhydric alcohol include glycerin, propanediol, butanediol, pentanediol, trimethylolpropane, butanetriol, ethylene glycol, diethylene glycol, and triethylene glycol. Among these, a polyhydric alcohol having three or more hydroxyl groups such as glycerin is more preferable. Note that the polyhydric alcohol may be in a form of a dimer or a polymer. Alternatively, the polyhydric alcohol may contain only one kind of the above materials or may contain two or more kinds of the above materials.

The deliquescent substances are classified into salts and water-soluble organic substances. Specific examples of the salts include sodium formate, potassium formate, ammonium formate, sodium acetate, potassium acetate, lithium acetate, ammonium acetate, sodium lactate, potassium lactate, sodium benzoate, potassium benzoate, sodium propionate, potassium propionate, calcium chloride, lithium chloride, magnesium chloride, calcium chloride, lithium chloride, potassium chloride, sodium chloride, zinc chloride, aluminum chloride, lithium bromide, calcium bromide, potassium bromide, sodium hydroxide, sodium pyrrolidonecarboxylate, potassium carbonate, calcium citrate, sodium citrate, potassium citrate, and lithium citrate. Among these salts, only one kind may be contained, or two or more kinds may be contained. Among these, sodium formate, potassium formate, sodium acetate, potassium acetate, and potassium carbonate are preferable because these substances absorb and release a large amount of moisture per weight. Further, among these, a substance selected from the group consisting of carboxylates (sodium formate, sodium acetate, and sodium propionate) that form hydrate crystals within a humidity range of a relative humidity of 30 to 80% in a usage environment to promote rapid moisture absorption and release with a specific humidity range serving as a threshold value is preferable.

Specific examples of the water-soluble organic substance include sugars such as sucrose, pullulan, glucose, xylol, fructose, mannitol, and sorbitol; carboxylic acids such as citric acid; and amides such as urea.

On the assumption that the humidity control component contains a deliquescent substance, other components may be added as additives for adjusting the threshold humidity. Specific examples of such a component include another deliquescent substance, polyhydric alcohol, and a substance serving as a nucleating material of a hydrate crystal. Specific examples of the nucleating agent include carboxylic acids having two or more carboxyl groups and amides having two or more amide groups.

Note that when the heat storage base material for supporting the humidity control material is a metal, the metal salt may cause corrosion of the heat storage base material. Thus, when the heat storage base material is a metal, it is preferable to select carboxylate or polyhydric alcohol as the humidity control component. As for the form of the humidity control material, the water-absorbent resin may be in a form of powder, particles, or a block, or the water-absorbent resin may be supported by a ventilation member so as to be efficiently brought into contact with the air.

The heat storage base material may be made of a material containing hydrophilic fibers such as a porous body, a non-woven fabric, and a woven fabric in order to wet and hold the humidity control component. Alternatively, in order to increase a heat storage capacity from the viewpoint of improving heat exchange efficiency with the air, the heat storage base material may be made of a material containing, for example, a metal (aluminum or the like) or a ceramic.

The heat storage base material is constituted by a sheet material made of the above-described material. In a manufacturing process of the heat exchange element 120, the sheet material is formed into various shapes such as a flat plate shape, a pleated shape, and a honeycomb shape. For example, a sheet shape is first formed into a shape such as a corrugated shape (fluted shape) by a corrugator. Next, the formed sheet material is fixed to a flat plate-like liner made of the same material as the sheet material or a different material from the sheet material with an adhesive to produce an integrated heat storage base material.

Thus, the heat storage base material is formed with a large number of cells having fine cavities surrounded by the sheet material and the liner. In the heat exchange element 120, the large number of cells formed in the heat storage base material extend so as to penetrate the heat storage base material in the Z direction. The heat exchange element 120 has a layered structure (corrugated structure) of corrugated semicircular cells. The air in the pipe 140 can flow through the inside of the cell and thus pass through the heat exchange element 120 in the Z direction. In the manufacturing process of the heat exchange element 120, the humidity control material is attached to an inner surface of the cell. Note that the cell shape of the heat exchange element 120 is not limited to the above shape, and various shapes such as a hexagonal shape (honeycomb shape), a circular shape, and a triangular shape can be employed.

When ceramics are used as the heat storage base material, it is preferable to use a honeycomb structure in which cells having the same shape such as hexagons are arranged. A large number of cells partitioned by porous partition walls extend so as to pass through the heat storage base material in the Z direction, thereby forming a large number of flow paths. In a method for manufacturing the honeycomb structure of the heat exchange element made of ceramics, first, raw materials such as a ceramic raw material powder, a binder, and a pore forming material are kneaded to prepare a kneaded clay. Next, the kneaded clay is extruded by a screw type extruder to prepare a formed body having the honeycomb structure. The obtained formed body is dried or fired to produce an integrated heat storage base material.

In the present example, a metal is employed as a material constituting the heat storage base material in order to increase a heat storage capacity. The heat storage base material of the heat exchange element 120 is produced by layering metal sheets made of this metal. In this heat storage base material, a large number of cells having fine cavities surrounded by the metal sheets are formed. Thus, the heat exchange element 120 serves as a ventilation member that allows the air to be treated to flow along the inner surface of the cell.

As described above, the humidity control material is attached to the inner surface of the cell. In the present example, since the heat storage base material of the heat exchange element 120 is a metal, a carboxylate that forms a hydrate crystal is adopted as the humidity control component. More preferably, the humidity control component contains a carboxylate that forms a hydrate crystal and an additive that adjusts a crystallization threshold humidity. This makes it possible to freely adjust the threshold humidity while suppressing corrosion of the heat storage base material.

In the heat exchange element 120 described above, the heat storage base material made of the metal can exchange sensible heat (temperature) with the air in the cell, and the humidity control material can exchange latent heat (humidity) with the air in the cell. In order to improve the efficiency of this heat exchange, it is desirable that a contact area between the heat exchange element 120 and the air be large. From this point of view, in order to increase a surface area of the heat storage base material, a larger number of fine cells may be formed using a thinner metal sheet. In order to increase a surface area of the humidity control material, a larger number of particles of the humidity control material may be attached to the inner surface of the cell by making a particle diameter of the water-absorbent resin contained in the humidity control material smaller.

### Pair of Flow Conditioning Portions 130

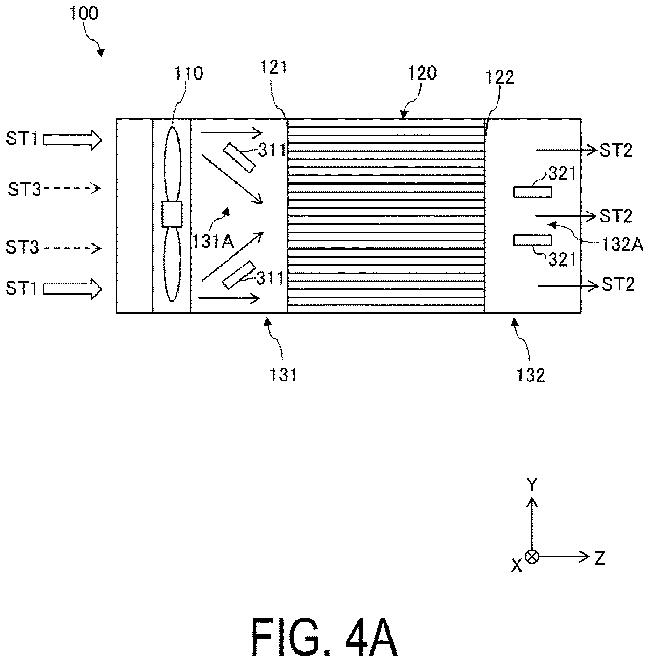

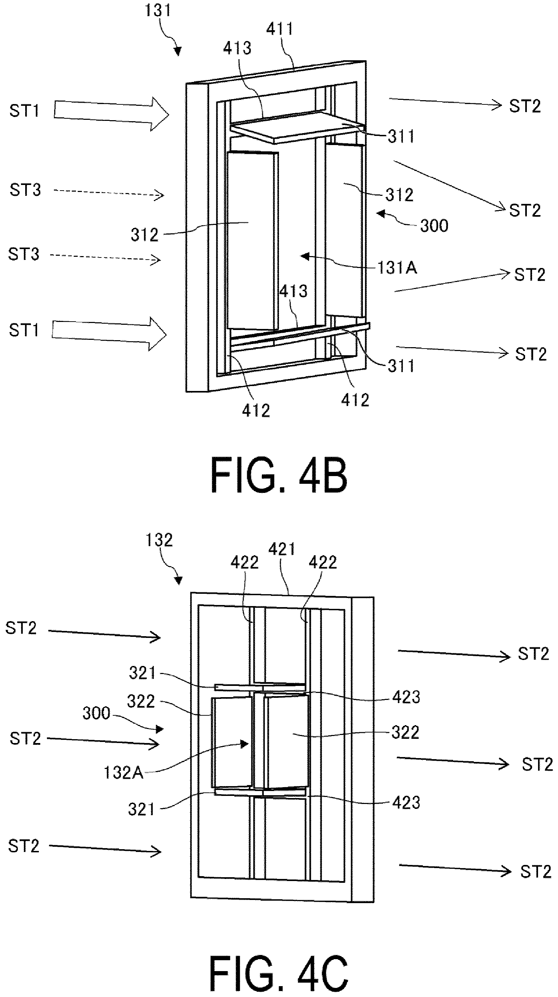

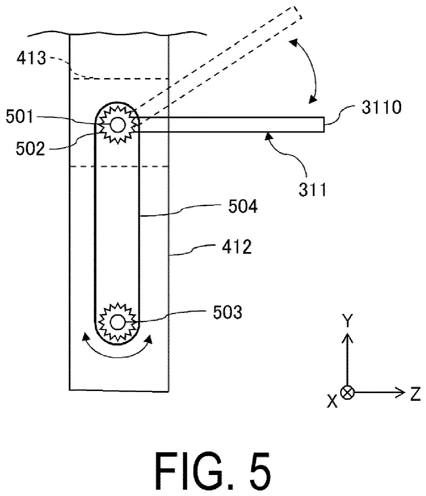

FIG. 4A is a vertical cross-sectional view illustrating the heat exchanger 100 in the air supply mode according to the first embodiment. FIG. 4B is a perspective view of the first flow conditioning portion 131 in the air supply mode according to the first embodiment. FIG. 4C is a perspective view of the second flow conditioning portion 132 in the air supply mode according to the first embodiment. FIG. 5 is a view for describing a driving mechanism of a flow conditioning plate 300 according to the first embodiment. In FIG. 4A, in order to facilitate understanding, the pipe 140 is omitted, only a horizontal flow conditioning plate 311 is illustrated regarding the first flow conditioning portion 131, and only a horizontal flow conditioning plate 321 is illustrated regarding the second flow conditioning portion 132.

As described above, when the structure in which the humidity control material is attached in the cells of the heat storage base material made of the metal is employed in the heat exchange element 120, sensible heat (temperature) easily moves between the cells made of the metal, but latent heat (moisture) is difficult to move between the cells made of the metal. When the unevenness in wind velocity occurs in the heat exchange element 120, there is a high possibility of causing dew condensation particularly due to uneven absorption and release of latent heat (humidity). Because of this, in the present embodiment, the pair of flow conditioning portions 130 are provided in order to suppress unevenness in wind velocity in the heat exchange element 120. Each of the pair of flow conditioning portions 130 includes the flow conditioning plate 300 (see FIG. 3) that is displaceable so as to change an orientation thereof, and conditions an air flow according to the orientation of the flow conditioning plate 300.

As illustrated in FIG. 4B, the first flow conditioning portion 131 includes a frame portion 411 having a rectangular frame shape fixed to an inner peripheral surface of the pipe 140. Two vertical frames 412 extending in the Y direction are provided at an opening portion penetrating the inside of the frame portion 411 in the Z direction so as to be bilaterally symmetrical with respect to the center of the frame portion 411 in the X direction. Between the two vertical frames 412, two horizontal frames 413 extending in the X direction are provided so as to be vertically symmetrical with respect to the center of the frame portion 411 in the Y direction. A square opening portion surrounded by the vertical frames 412 and the horizontal frames 413 is referred to as a central opening 131A of the first flow conditioning portion 131. The axis O of the axial flow fan 110 passes through the central opening 131A.

The first flow conditioning portion 131 is provided with a plurality of flow conditioning plates 300. In the present example, the plurality of flow conditioning plates 300 include two horizontal flow conditioning plates 311 and two vertical flow conditioning plates 312. Each horizontal flow conditioning plate 311 is a plate for adjusting an orientation of an air flow in the vertical direction (Y direction). Each vertical flow conditioning plate 312 is a plate for adjusting an orientation of an air flow in the horizontal direction (X direction).

The two horizontal flow conditioning plates 311 individually have a rectangular shape elongated in the X direction and extend from the two horizontal frames 413 toward the heat exchange element 120 side (downstream side in the Z direction). The two vertical flow conditioning plates 312 individually have a rectangular shape elongated in the Y direction, and extend from the two vertical frames 412 toward the heat exchange element 120 side (downstream side in the Z direction). The four flow conditioning plates 300 are arranged so as to surround the central opening 131A. In the present example, each flow conditioning plate 300 is closer to the inner peripheral surface of the pipe 140 than the axis O.

The plurality of flow conditioning plates 300 are rotatable such that an end portion of each flow conditioning plate 300 on the heat exchange element 120 side approaches the axis O. For example, FIG. 5 illustrates a movable mechanism of the lower horizontal flow conditioning plate 311 of the two horizontal flow conditioning plates 311. A support shaft 501 extending in the X direction is provided inside the lower horizontal frame 413 of the two horizontal frames 413. An end portion of the lower horizontal flow conditioning plate 311 on the axial flow fan 110 side (upstream side in the Z direction) is fixed to the support shaft 501 so as to be rotatable integrally with the support shaft 501. A gear 502 is provided at an end portion of the support shaft 501 in the X direction. The gear 502 is disposed inside the vertical frame 412, and is connected to a gear 503 below the gear 502 by using a belt 504.

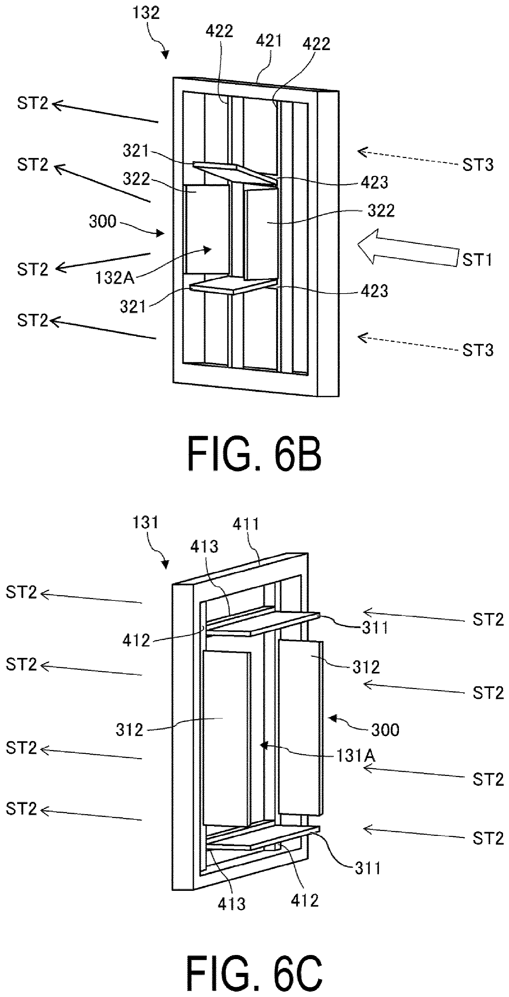

The gear 503 is fixed to a shaft of a motor to be rotationally driven by the control device 900. When the control device 900 rotates the motor, the rotation of the gear 503 is transmitted to the gear 502 through the belt 504, and the horizontal flow conditioning plate 311 rotates around the support shaft 501. Thus, the horizontal flow conditioning plate 311 of the present example can be displaced between a normal position (see FIG. 6C) at which the horizontal flow conditioning plate 311 substantially horizontally extends and an inclined position (see FIG. 4B) at which the horizontal flow conditioning plate 311 is inclined to the axis O side. When the horizontal flow conditioning plate 311 is displaced from the normal position to the inclined position, the horizontal flow conditioning plate 311 is inclined obliquely rearward such that an end portion 3110 thereof on the heat exchange element 120 side (downstream side in the Z direction) approaches the axis O.

The other flow conditioning plates 300 (the upper horizontal flow conditioning plate 311 and the two vertical flow conditioning plates 312) are also rotatable by a mechanism similar to that illustrated in FIG. 5. The vertical flow conditioning plate 312 of the present example is displaceable between a normal position (see FIG. 6C) where the vertical flow conditioning plate 312 substantially vertically extends and an inclined position (see FIG. 4B) where the vertical flow conditioning plate 312 is inclined to the axis O side. Note that the driving mechanism of the flow conditioning plate 300 is not limited to the example illustrated in FIG. 5, and may be any mechanism that can displace the flow conditioning plate 300 between the normal position and the inclined position.

As illustrated in FIG. 4C, similarly to the first flow conditioning portion 131, the second flow conditioning portion 132 includes a frame portion 421 having a rectangular frame shape, and two vertical frames 422 and two horizontal frames 423 are provided at an opening portion of the frame portion 421. A square opening portion surrounded by the vertical frames 422 and the horizontal frames 423 is referred to as a central opening 132A of the second flow conditioning portion 132. The axis O of the axial flow fan 110 passes through the central opening 132A.

Similarly to the first flow conditioning portion 131, the second flow conditioning portion 132 includes a plurality of flow conditioning plates 300 (two horizontal flow conditioning plates 321 and two vertical flow conditioning plates 322). The two horizontal flow conditioning plates 321 extend from the two horizontal frames 423 toward the heat exchange element 120 side (upstream side in the Z direction). The two vertical flow conditioning plates 322 extend from the two vertical frames 422 toward the heat exchange element 120 side (upstream side in the Z direction). The four flow conditioning plates 300 are arranged so as to surround the central opening 132A. In the present example, each flow conditioning plate 300 is closer to the axis O than the inner peripheral surface of the pipe 140. Thus, the central opening 132A of the second flow conditioning portion 132 is smaller than the central opening 131A of the first flow conditioning portion 131, and the central opening 132A is entirely disposed inside the central opening 131A when viewed from the Z direction.

Each flow conditioning plate 300 of the second flow conditioning portion 132 is also rotatable by a mechanism similar to that illustrated in FIG. 5. However, each flow conditioning plate 300 of the second flow conditioning portion 132 is rotatable such that the end portion of the flow conditioning plate 300 on the heat exchange element 120 side approaches the inner peripheral surface of the pipe 140 (the outer side portion of the pipe 140). In the present example, the horizontal flow conditioning plate 321 can be displaced between a normal position (see FIG. 4C) at which the horizontal flow conditioning plate 321 substantially horizontally extends and an inclined position (see FIG. 6B) at which the horizontal flow conditioning plate 321 is inclined toward the inner peripheral surface side of the pipe 140. The vertical flow conditioning plate 322 can be displaced between a normal position (see FIG. 4C) at which the vertical flow conditioning plate 322 substantially vertically extends and an inclined position (see FIG. 6B) at which the vertical flow conditioning plate 322 is inclined toward the inner peripheral surface side of the pipe 140.

As described above, the direction of the air flow is switched in the axial flow fan 110 according to the air supply mode and the air exhaust mode. Each of the pair of flow conditioning portions 130 (the first flow conditioning portion 131 and the second flow conditioning portion 132) changes the orientation of the flow conditioning plate 300 in response to switching of the direction of the air flow in the axial flow fan 110. The pair of flow conditioning portions 130 is constituted by an upstream flow conditioning portion located on the upstream side of the heat exchange element 120 in the direction of the air flow and a downstream flow conditioning portion located on the downstream side of the heat exchange element. As will be described later, in the air supply mode, the first flow conditioning portion 131 is an upstream flow conditioning portion, and the second flow conditioning portion 132 is a downstream flow conditioning portion. In the air exhaust mode, the first flow conditioning portion 131 is the downstream flow conditioning portion, and the second flow conditioning portion 132 is the upstream flow conditioning portion.

When the direction of the air flow is switched in the axial flow fan 110, the upstream flow conditioning portion changes the orientations of the flow conditioning plates 300 such that the flow conditioning plates 300 diffuse a part of the air flow inward or outward in a radial direction of the axis O of the axial flow fan 110. The downstream flow conditioning portion changes the orientation of each flow conditioning plate 300 such that the area where the flow conditioning plate 300 faces the air flow is reduced. Hereinafter, driving modes in the air supply mode and the air exhaust mode will be described.

### Driving Mode in Air Supply Mode

As illustrated in FIG. 4A, in the heat exchanger 100 in the air supply mode, an air flow from the outside of the building to the inside of the room (an air flow toward the downstream side in the Z direction) is generated by the normal rotation of the axial flow fan 110. At this time, a wind velocity of the air flow sent out by the axial flow fan 110 toward the heat exchange element 120 increases from the axis O toward the inner peripheral surface of the pipe 140. Thus, at a first surface 121 of the heat exchange element 120 facing the axial flow fan 110 side, a high-velocity air flow ST1 is supplied to the inner peripheral surface side of the pipe 140, while a low-velocity air flow ST3 is supplied to the center side (the axis O side) of the pipe 140, which may cause unevenness in wind velocity.

Because of this, when the direction of the air flow is switched to the direction from the axial flow fan 110 toward the heat exchange element 120, the upstream flow conditioning portion changes the orientations of the flow conditioning plates 300 such that the flow conditioning plates 300 approach the axis O toward the downstream side in the direction of the air flow and an angle formed by each flow conditioning plate 300 and the axis O is 45 degrees or less. The downstream flow conditioning portion changes the orientation of each flow conditioning plate 300 such that the flow conditioning plate 300 and the axis O are parallel to each other. In the present example, as illustrated in FIG. 4A to FIG. 4C, when the air supply mode is executed, the control device 900 displaces each flow conditioning plate 300 of the first flow conditioning portion 131 to the inclined position and displaces each flow conditioning plate 300 of the second flow conditioning portion 132 to the normal position. The flow conditioning plate 300 at the inclined position is rotated by, for example, 30 degrees from the normal position.

Thus, as illustrated in FIG. 4A and FIG. 4B, in the first flow conditioning portion 131, all of the plurality of flow conditioning plates 300 (the horizontal flow conditioning plates 311 and the vertical flow conditioning plates 312) are inclined inward in the radial direction of the axis O toward the heat exchange element 120 side (the downstream side in the Z direction). The air flow supplied from the axial flow fan 110 is diffused inward in the radial direction of the axis O along each flow conditioning plate 300. Specifically, an orientation in the vertical direction (Y direction) of the air flow is adjusted to be directed toward the center side of the pipe 140 along the horizontal flow conditioning plates 311, and an orientation in the vertical direction (Y direction) of the air flow is adjusted to be directed toward the center side of the pipe 140 along the vertical flow conditioning plates 312. Thus, a flow rate and a flow velocity of the air flow are improved on the center side of the pipe 140 through which the low-velocity air flow ST3 flows.

Since an inclination angle of each flow conditioning plate 300 with respect to the axis O is 45 degrees or less, each flow conditioning plate 300 can smoothly guide the air flow flowing in the Z direction and suppress a decrease in flow velocity of the air flow. In the first flow conditioning portion 131 of the present example, each flow conditioning plate 300 is closer to the inner peripheral surface of the pipe 140 than the axis O. Thus, each flow conditioning plate 300 reliably comes into contact with the high-velocity air flow ST1 flowing along the inner peripheral surface of the pipe 140, and can diffuse the air flow ST1 inward in the radial direction of the axis O.

As described above, the air flow passing through the first flow conditioning portion 131 toward the heat exchange element 120 is supplied to the entire first surface 121 at a substantially uniform wind velocity. A medium-velocity air flow ST2 is totally heat-exchanged when passing through the heat exchange element 120, and is discharged from a second surface 122 of the heat exchange element 120. The air flow ST2 discharged from the second surface 122 passes through the second flow conditioning portion 132 and is supplied into the room. At this time, as illustrated in FIG. 4A and FIG. 4C, in the second flow conditioning portion 132, all of the flow conditioning plates 300 displaced to the normal position extend substantially parallel to the Z direction. As a result, the air flow ST2 passing through the second flow conditioning portion 132 can smoothly flow out into the room because a decrease in flow velocity due to contact with each flow conditioning plate 300 is suppressed.

### Driving Mode in Air Exhaust Mode

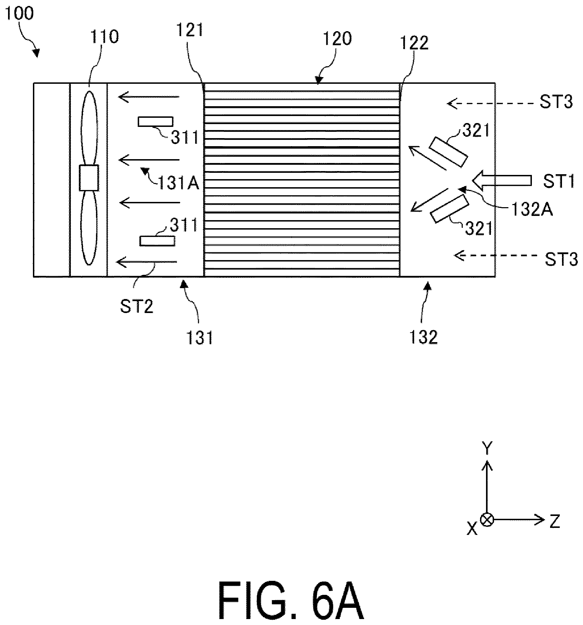

FIG. 6A is a vertical cross-sectional view illustrating the heat exchanger 100 in the air exhaust mode according to the first embodiment. FIG. 6B is a perspective view of the second flow conditioning portion 132 in the air exhaust mode according to the first embodiment. FIG. 6C is a perspective view of the first flow conditioning portion 131 in the air exhaust mode according to the first embodiment.

As illustrated in FIG. 6A, in the heat exchanger 100 in the air exhaust mode, an air flow from the inside of the room to the outside of the building (an air flow toward the upstream side in the Z direction) is generated by the reverse rotation of the axial flow fan 110. At this time, due to the suction force of the axial flow fan 110, the wind velocity of the air flow from the inside of the room toward the heat exchange element 120 decreases from the axis O toward the inner peripheral surface of the pipe 140. Therefore, on the second surface 122 of the heat exchange element 120 facing the opposite side to the axial flow fan 110, the high-velocity air flow ST1 is supplied to the center side (the axis O side) of the pipe 140, while the low-velocity air flow ST3 is supplied to the inner peripheral surface side of the pipe 140, which may cause unevenness in wind velocity.

Thus, when the direction of the air flow is switched to the direction from the heat exchange element 120 toward the axial flow fan 110, the upstream flow conditioning portion changes the orientations of flow conditioning plates 300 such that the flow conditioning plates 300 moves away from the axis O toward the downstream side in the direction of the air flow and the angle formed by each flow conditioning plate 300 and the axis O is 45 degrees or less. The downstream flow conditioning portion changes the orientation of each flow conditioning plate 300 such that the flow conditioning plate 300 and the axis O are parallel to each other. In the present example, as illustrated in FIG. 6A to FIG. 6C, when the air exhaust mode is executed, the control device 900 displaces each flow conditioning plate 300 of the first flow conditioning portion 131 to the normal position and displaces each flow conditioning plate 300 of the second flow conditioning portion 132 to the inclined position. The flow conditioning plate 300 at the inclined position is rotated by, for example, 30 degrees from the normal position.

Thus, as illustrated in FIG. 6A and FIG. 6B, in the second flow conditioning portion 132, all of the plurality of flow conditioning plates 300 (the horizontal flow conditioning plates 321 and the vertical flow conditioning plates 322) are inclined outward in the radial direction of the axis O toward the heat exchange element 120 side (the upstream side in the Z direction). The air flow sucked by the axial flow fan 110 is diffused outward in the radial direction of the axis O along each flow conditioning plate 300. Specifically, an orientation in the vertical direction (Y direction) of the air flow is adjusted to be directed toward the inner peripheral surface side of the pipe 140 along the horizontal flow conditioning plates 321, and an orientation in the vertical direction (Y direction) of the air flow is adjusted to be directed toward the inner peripheral surface side of the pipe 140 along the vertical flow conditioning plates 322. This improves the flow rate and the flow velocity of the air flow on the inner peripheral surface side of the pipe 140 through which the low-velocity air flow ST3 flows.

Since an inclination angle of each flow conditioning plate 300 with respect to the axis O is 45 degrees or less, each flow conditioning plate 300 can smoothly guide the air flow flowing in the Z direction and suppress a decrease in flow velocity of the air flow. In the second flow conditioning portion 132 of the present example, each flow conditioning plate 300 is closer to the axis O than the inner peripheral surface of the pipe 140. Thus, each flow conditioning plate 300 reliably comes into contact with the high-velocity air flow ST1 flowing along the axis O, and can diffuse the air flow ST1 outward in the radial direction of the axis O.

As described above, the air flow passing through the second flow conditioning portion 132 toward the heat exchange element 120 is supplied to the entire second surface 122 at a substantially uniform wind velocity. The medium-velocity air flow ST2 is totally heat-exchanged when passing through the heat exchange element 120, and is discharged from the first surface 121 of the heat exchange element 120. The air flow ST2 discharged from the first surface 121 passes through the first flow conditioning portion 131 and the axial flow fan 110 and is discharged to the outside of the building. At this time, as illustrated in FIG. 6A and FIG. 6C, in the first flow conditioning portion 131, each flow conditioning plate 300 displaced to the normal position extends substantially parallel to the Z direction. As a result, the air flow ST2 passing through the first flow conditioning portion 131 can smoothly flow out to the outside of the building because a decrease in flow velocity due to contact with each flow conditioning plate 300 is suppressed.

### Second Embodiment

The pair of flow conditioning portions 130 are not limited to the structure described in the first embodiment, and various structures can be adopted. In the following second to fourth embodiments each, a structure of the pair of flow conditioning portions 130 is different from that of the first embodiment.

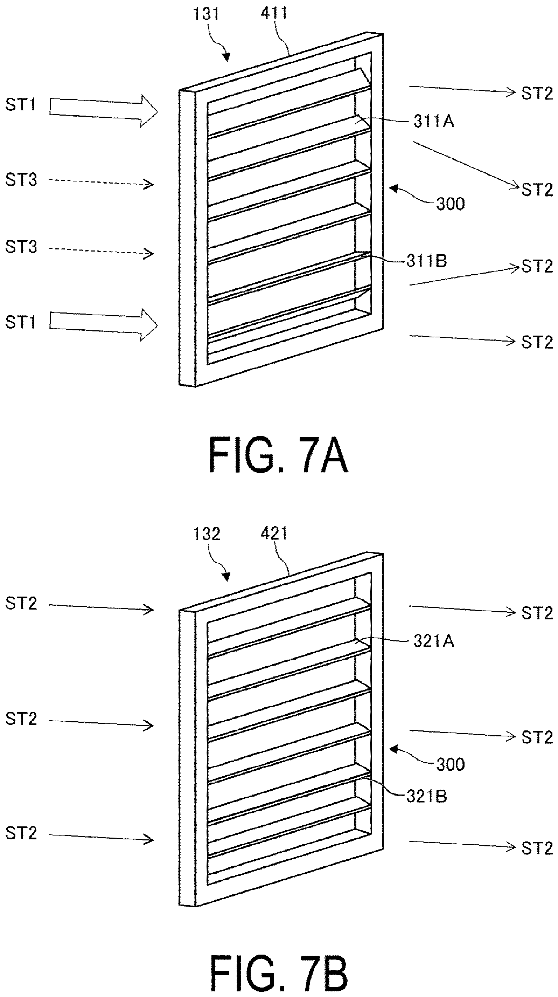

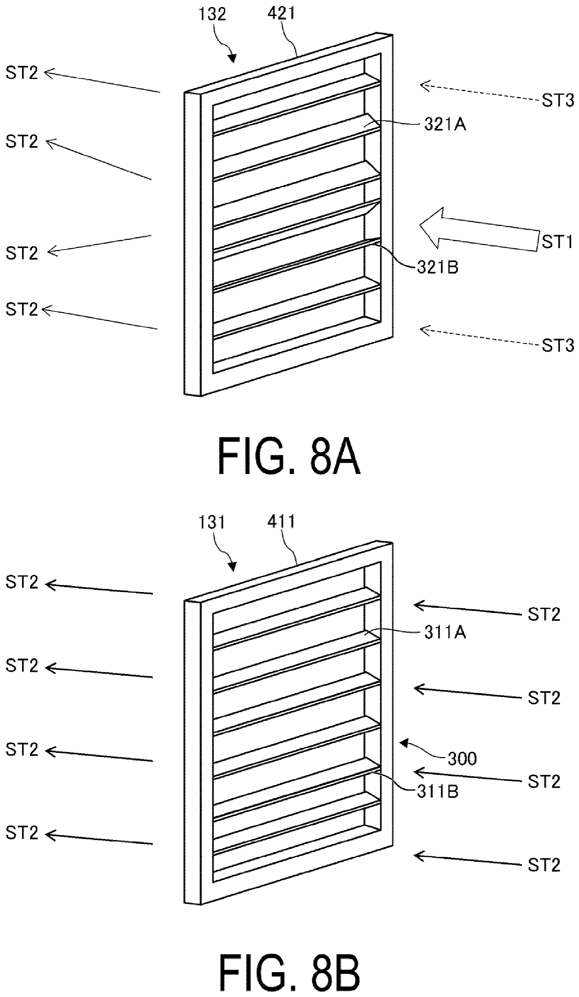

The pair of flow conditioning portions 130 according to the second embodiment will be described. FIG. 7A is a perspective view of the first flow conditioning portion 131 in the air supply mode according to the second embodiment. FIG. 7B is a perspective view of the second flow conditioning portion 132 in the air supply mode according to the second embodiment. FIG. 8A is a perspective view of the second flow conditioning portion 132 in the air exhaust mode according to the second embodiment. FIG. 8B is a perspective view of the first flow conditioning portion 131 in the air exhaust mode according to the second embodiment.

As illustrated in FIG. 7A, similarly to the first embodiment, the first flow conditioning portion 131 includes the frame portion 411 and a plurality of flow conditioning plates 300. In the second embodiment, the plurality of flow conditioning plates 300 include a plurality of horizontal flow conditioning plates 311A and 311B, but do not include the vertical flow conditioning plates 312 (see FIG. 4B). Each of the horizontal flow conditioning plates 311A and 311B has a rectangular shape extending in the X direction at an inner opening of the frame portion 411, and both ends thereof are supported by the vertical frames of the frame portion 411. The plurality of (three in the present example) horizontal flow conditioning plates 311A are arranged at intervals from each other upward from the center of the opening of the frame portion 411. The plurality of (three in the present example) horizontal flow conditioning plates 311B are arranged at intervals from each other downward from the center of the opening of the frame portion 411.

Each of the horizontal flow conditioning plates 311A and 311B is displaceable between a normal position (see FIG. 8B) at which the horizontal flow conditioning plate substantially horizontally extends and an inclined position (see FIG. 7A) at which the horizontal flow conditioning plate is inclined toward the axis O side. Specifically, when the plurality of horizontal flow conditioning plates 311A are displaced from the normal position to the inclined position, all of the plurality of horizontal flow conditioning plates 311A are inclined obliquely downward. When the plurality of horizontal flow conditioning plates 311B are displaced from the normal position to the inclined position, all of the horizontal flow conditioning plates 311B are inclined obliquely upward. At this time, an inclination angle of each of the flow conditioning plates 300 (horizontal flow conditioning plates 311A and 311B) with respect to the axis O is 45 degrees or less.

As illustrated in FIG. 7B, the second flow conditioning portion 132 includes the frame portion 421 and a plurality of flow conditioning plates 300 (a plurality of horizontal flow conditioning plates 321A and 321B), similarly to the first flow conditioning portion 131 described above. Each of the horizontal flow conditioning plates 321A and 321B is displaceable between a normal position (see FIG. 8A) at which the horizontal flow conditioning plate substantially horizontally extends and an inclined position (see FIG. 7B) at which the horizontal flow conditioning plate is inclined toward the axis O side.

As illustrated in FIG. 7A and FIG. 7B, when the air supply mode is executed, the control device 900 displaces each flow conditioning plate 300 of the first flow conditioning portion 131 to the inclined position and displaces each flow conditioning plate 300 of the second flow conditioning portion 132 to the normal position. According to this, in the first flow conditioning portion 131, the orientation of the air flow in the vertical direction (Y direction) is adjusted along each flow conditioning plate 300, and thus the air flow is supplied inward in the radial direction of the axis O to the entire first surface 121 at a substantially uniform wind velocity. In the second flow conditioning portion 132, since each flow conditioning plate 300 extends substantially parallel to the Z direction, a decrease in flow velocity of the air flow is suppressed, and the air flow can smoothly flow out into the room.

As illustrated in FIG. 8A and FIG. 8B, when the air exhaust mode is executed, the control device 900 displaces each flow conditioning plate 300 of the first flow conditioning portion 131 to the normal position and displaces each flow conditioning plate 300 of the second flow conditioning portion 132 to the inclined position. According to this, in the second flow conditioning portion 132, the orientation of the air flow in the vertical direction (Y direction) is adjusted along each flow conditioning plate 300, and thus the air flow is diffused outward in the radial direction of the axis O and is supplied to the entire second surface 122 at a substantially uniform wind velocity. In the first flow conditioning portion 131, since each flow conditioning plate 300 extends substantially parallel to the Z direction, a decrease in flow velocity of the air flow is suppressed, and the air flow can smoothly flow out to the outside of the building.

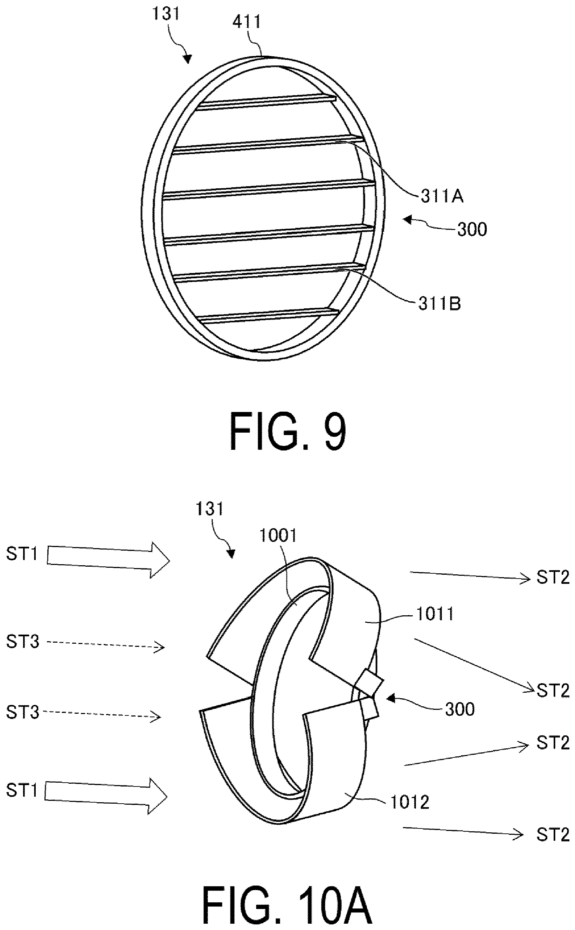

The shape of the frame portion 411 of the flow conditioning portion 130 is not limited to the rectangular frame shape, and various shapes corresponding to the holes to which the flow conditioning portions 130 are attached can be adopted. The plurality of flow conditioning plates 300 are not limited to having the same shape or size, and may have different shapes or sizes. FIG. 9 is a perspective view of the first flow conditioning portion 131 according to a first modification. For example, in the first flow conditioning portion 131 of the first modification, the frame portion 411 has a circular frame shape, and the plurality of flow conditioning plates 300 have horizontal lengths that decrease as the distances thereof from the center of the opening of the frame portion 411 increase.

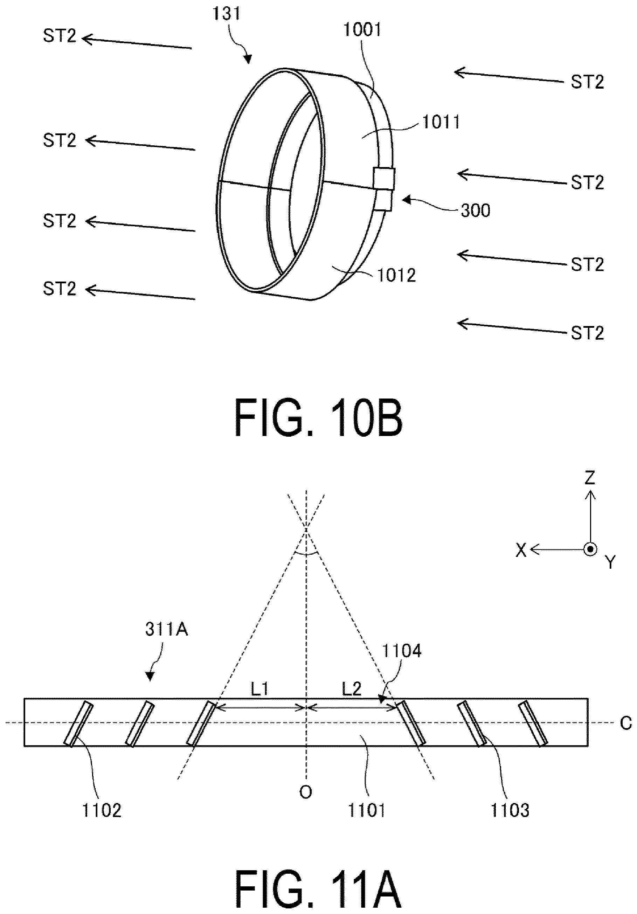

The shape of each flow conditioning plate 300 of the flow conditioning portion 130 is not limited to the flat plate shape, and various shapes can be adopted. FIG. 10A is a perspective view of the first flow conditioning portion 131 in the air supply mode according to a second modification. FIG. 10B is a perspective view of the second flow conditioning portion 132 in the air supply mode according to the second modification. FIG. 10B is a perspective view of the first flow conditioning portion 131 in the air exhaust mode according to the second modification.

As illustrated in FIG. 10A, the first flow conditioning portion 131 of the second modification includes the frame portion 411 (not illustrated) and a plurality of flow conditioning plates 300. The plurality of flow conditioning plates 300 include a pair of an upper flow conditioning plate 1011 and a lower flow conditioning plate 1012. The upper flow conditioning plate 1011 is a semicircular curved plate protruding upward when viewed from the Z direction. The upper flow conditioning plate 1011 is a semicircular curved plate protruding downward when viewed from the Z direction. A cylindrical body 1001 penetrating in the Z direction is supported at a central portion of the inner opening of the frame portion 411. The upper flow conditioning plate 1011 and the lower flow conditioning plate 1012 are vertically arranged on an outer peripheral side of the cylindrical body 1001, and are rotatably supported by the cylindrical body 1001.

As illustrated in FIG. 10A, when the respective flow conditioning plates 300 are displaced to the inclined positions in the air supply mode, the upper flow conditioning plate 1011 and the lower flow conditioning plate 1012 rotate in directions away from each other, and end portions on the heat exchange element 120 side (the downstream side in the Z direction) of the respective flow conditioning plates 300 approach the axis O. According to this, in the first flow conditioning portion 131, an orientation of the air flow in the vertical direction (Y direction) is adjusted along the upper flow conditioning plate 1011 and the lower flow conditioning plate 1012, and thus the air flow is supplied to the entire first surface 121 at a substantially uniform wind velocity.

As illustrated in FIG. 10B, when the respective flow conditioning plates 300 are displaced to the normal positions in the air exhaust mode, the upper flow conditioning plate 1011 and the lower flow conditioning plate 1012 vertically overlap each other in horizontal orientations and form a tubular shape extending in the Z direction as a whole. According to this, in the first flow conditioning portion 131, since the upper flow conditioning plate 1011 and the lower flow conditioning plate 1012 extend substantially parallel to the Z direction, a decrease in flow velocity of the air flow is suppressed, and the air flow can smoothly flow out to the outside of the building.

### Third Embodiment

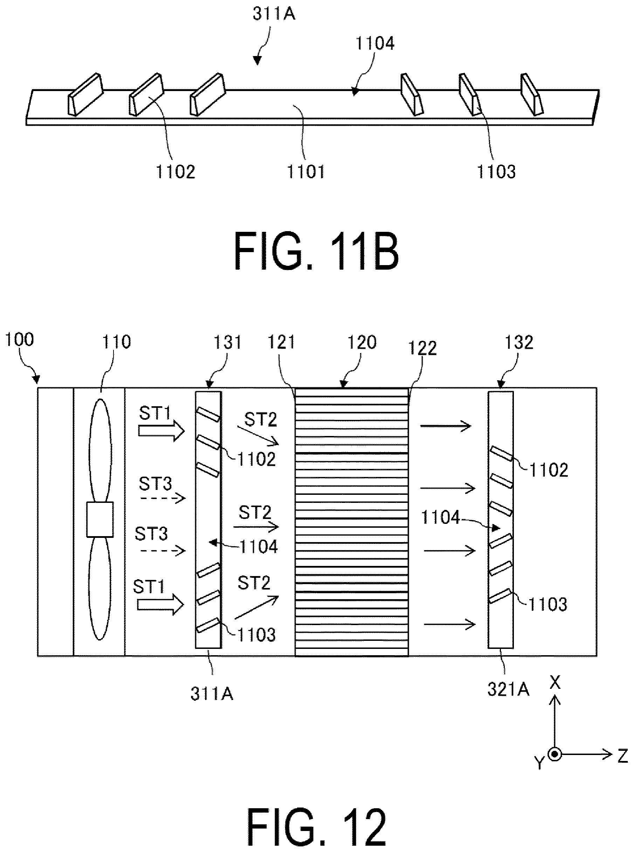

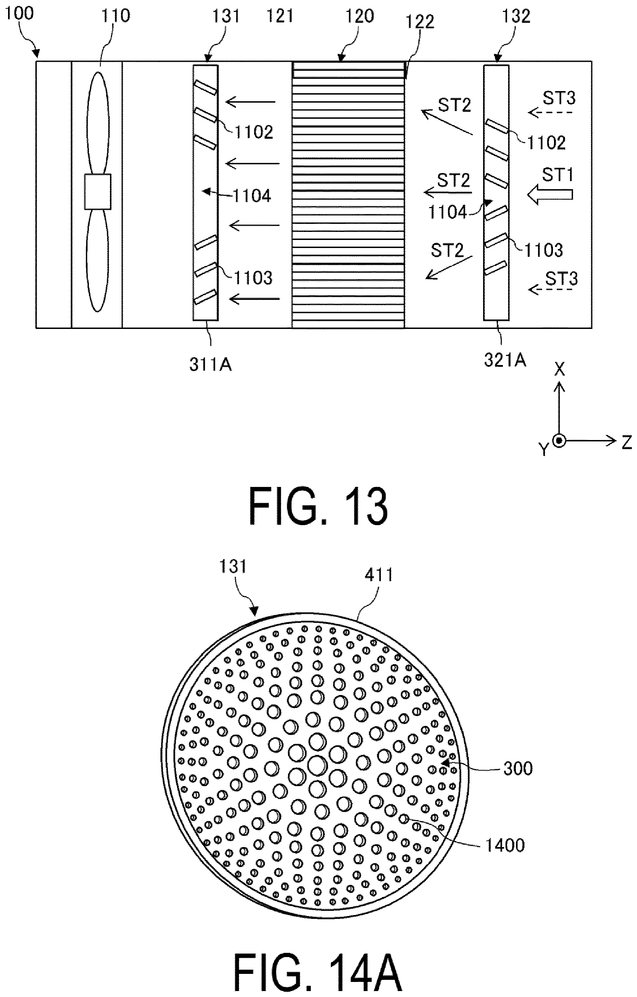

A pair of flow conditioning portions 130 according to the third embodiment will be described. The third embodiment is different from the second embodiment in that fins 1102 and 1103 for adjusting an orientation of the air flow in the horizontal direction (X direction) are provided at the flow conditioning plate 300 for adjusting an orientation of the air flow in the vertical direction (Y direction). FIG. 11A is a plan view of the horizontal flow conditioning plate 311A according to the second embodiment. FIG. 11B is a perspective view of the horizontal flow conditioning plate 311A according to the second embodiment. FIG. 12 is a horizontal cross-sectional view illustrating the heat exchanger 100 in the air supply mode according to the third embodiment. FIG. 13 is a horizontal cross-sectional view illustrating the heat exchanger 100 in the air exhaust mode according to the third embodiment.

As illustrated in FIG. 11A and FIG. 11B, each of the plurality of horizontal flow conditioning plates 311A provided in the first flow conditioning portion 131 includes a slat 1101 and a plurality of fins 1102 and 1103. The slat 1101 is a plate body of the horizontal flow conditioning plate 311A, and extends outward in the radial direction from a rotation center line C orthogonal to the direction of the air flow. The rotation center line C passes through an axis that rotatably supports the slat 1101. The plurality of fins 1102 and 1103 erect from the surface of the slat 1101 and extend in a direction crossing the rotation center line C.

In the present example, the three fins 1102 and the three fins 1103 are provided symmetrically with each other on both sides of the axis O in each horizontal flow conditioning plate 311A. The rotation center line C extends in the X direction orthogonal to the direction of the air flow (Z direction). The three fins 1102 are inclined toward the axis O side (upper right side in FIG. 11A) toward the heat exchange element 120 side (downstream side in the Z direction). The three fins 1103 are inclined toward the axis O side (upper left side in FIG. 11A) toward the heat exchange element 120 side (downstream side in the Z direction). An inclination angle of each of the fins 1102 and 1103 with respect to the axis O is 45 degrees or less.

Similarly to the horizontal flow conditioning plates 311A, each of the plurality of horizontal flow conditioning plates 311B includes a plurality of fins 1102 and 1103 on the slat 1101. That is, in each of the flow conditioning plates 300 (the horizontal flow conditioning plates 311A and 311B) of the first flow conditioning portion 131, the fins 1102 and 1103 extend so as to approach the rotation center line C toward the downstream side in the direction of the air flow in the air supply mode (the downstream side in the Z direction).

In the second flow conditioning portion 132, similarly to the first flow conditioning portion 131 described above, the fins 1102 and 1103 are provided in each of the plurality of flow conditioning plates 300 (the plurality of horizontal flow conditioning plates 321A and 321B). However, in each of the flow conditioning plates 300 (the horizontal flow conditioning plates 321A and 321B) of the second flow conditioning portion 132, the fins 1102 and 1103 of the flow conditioning plate 300 extend gradually away from the rotation center line C toward the downstream side (the upstream side in the Z direction) in the direction of the air flow in the air exhaust mode (see FIG. 12 and FIG. 13).

In each flow conditioning plate 300, a central gap 1104 through which the axis O passes in a plan view is formed between the plurality of fins 1202 and the plurality of fins 1203. A formation width (length in the X direction) of the central gap 1104 is the sum of a shortest distance L1 from the axis O to the plurality of fins 1102 in a plan view and a shortest distance L2 from the axis O to the plurality of fins 1103 in a plan view. In the present example, the flow conditioning plate 300 of the first flow conditioning portion 131 has a larger formation width of the central gap 1104 than that of the flow conditioning plate 300 of the second flow conditioning portion 132 (see FIG. 12 and FIG. 13).

In the first flow conditioning portion 131 in the air supply mode, the orientation of the air flow in the vertical direction (Y direction) is adjusted along the slat 1101 of each flow conditioning plate 300, and the air flow is diffused inward in the radial direction of the axis O. Further, as illustrated in FIG. 12, the orientation of the air flow in the horizontal direction (X direction) is adjusted along the fins 1102 and 1103 of each flow conditioning plate 300, and the air flow is diffused inward in the radial direction of the axis O. In the second flow conditioning portion 132 in the air exhaust mode, the orientation of the air flow in the vertical direction (Y direction) is adjusted along the slat 1101 of each flow conditioning plate 300, and the air flow is diffused outward in the radial direction of the axis O. Further, as illustrated in FIG. 13, the orientation of the air flow in the horizontal direction (X direction) is adjusted along the fins 1102 and 1103 of each flow conditioning plate 300, and the air flow is guided outward in the radial direction of the axis O.

With this configuration, even when the first flow conditioning portion 131 and the second flow conditioning portion 132 include no vertical flow conditioning plate 312, both the orientation of the air flow in the vertical direction (Y direction) and the orientation of the air flow in the horizontal direction (X direction) can be adjusted to suppress unevenness in wind velocity of the air flow in the heat exchange element 120. Since the inclination angle of each of the fins 1102 and 1103 with respect to the axis O is 45 degrees or less, each of the flow conditioning plates 300 can smoothly guide the air flow flowing in the Z direction, and can suppress a decrease in flow velocity of the air flow.

In the present example, since the first flow conditioning portion 131 has the large formation width of the central gap 1104, the plurality of fins 1102 and 1103 are arranged so as to be biased to the inner peripheral surface side of the pipe 140. Each of the fins 1102 and 1103 of the first flow conditioning portion 131 reliably comes into contact with the high-velocity air flow ST1 flowing on the inner peripheral surface side of the pipe 140, and can diffuse the air flow ST1 inward in the radial direction of the axis O. On the other hand, since the second flow conditioning portion 132 has the small formation width of the central gap 1104, the plurality of fins 1102 and 1103 are arranged so as to be biased to the center side of the pipe 140. Each of the fins 1102 and 1103 of the second flow conditioning portion 132 reliably comes into contact with the high-velocity air flow ST1 flowing on the center side of the pipe 140 and can diffuse the air flow ST1 outward in the radial direction of the axis O.

As a modification of the above-described embodiment, the fins 1102 and 1103 for adjusting the orientation of the air flow in the vertical direction (Y direction) may be provided at each flow conditioning plate 300 (for example, each of the vertical flow conditioning plates 312 and 322) for adjusting the orientation of the air flow in the horizontal direction (X direction). In this case, in each flow conditioning plate 300, the air flow can be diffused inward or outward in the radial direction of the axis O by adjusting the orientation in the horizontal direction (X direction) of the air flow along the slat 1101 and further adjusting the orientation in the vertical direction (Y direction) of the air flow along the fins 1102 and 1103.

### Fourth Embodiment

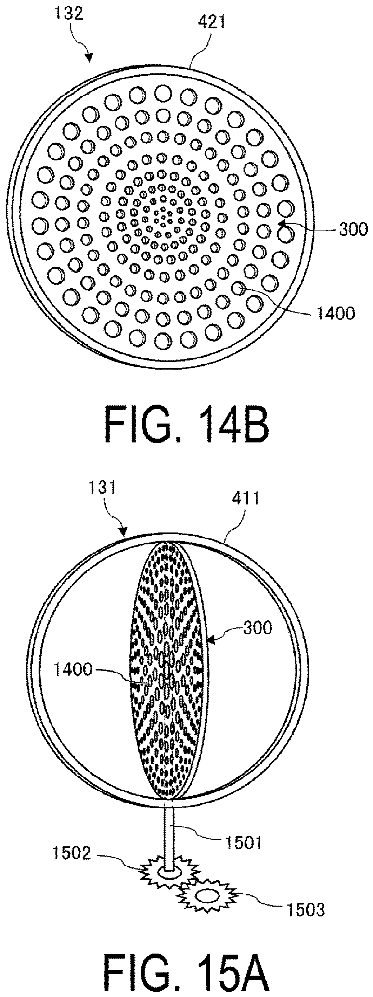

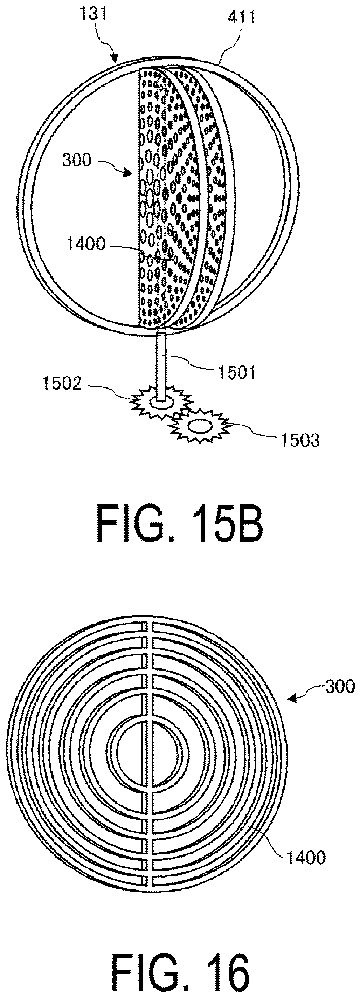

A pair of flow conditioning portions 130 according to the fourth embodiment will be described. The fourth embodiment is different from the first to third embodiments in that the air flow is adjusted by opening areas of a plurality of opening portions 1400 provided at the flow conditioning plate 300. FIG. 14A is a perspective view of the first flow conditioning portion 131 in the air supply mode according to the fourth embodiment. FIG. 14B is a perspective view of the second flow conditioning portion 132 in the air supply mode according to the fourth embodiment. FIG. 15A is a perspective view of the second flow conditioning portion 132 in the air exhaust mode according to the fourth embodiment. FIG. 15B is a perspective view of the first flow conditioning portion 131 in the air exhaust mode according to the fourth embodiment. In FIG. 14A and FIG. 14B, a driving mechanism of the flow conditioning plate 300 is omitted.

As illustrated in FIG. 14A, in the first flow conditioning portion 131 of the fourth embodiment, one flow conditioning plate 300 is rotatably supported at the inner opening of the frame portion 411. The flow conditioning plate 300 includes a plurality of opening portions 1400 penetrating in a thickness direction. Opening areas of the plurality of opening portions 1400 decrease as the distances thereof increase from the axis O. As illustrated in FIG. 14B, the second flow conditioning portion 132 of the fourth embodiment has a configuration similar to that of the first flow conditioning portion 131, but is different therefrom in that the opening areas of the plurality of opening portions 1400 increase as the distances thereof increase from the axis O. The larger the opening area of the opening portion 1400 is, the smaller the ventilation resistance is, and the smaller the opening area is, the larger the ventilation resistance is.

As illustrated in FIG. 15A, the flow conditioning plate 300 of the first flow conditioning portion 131 is fixed to a shaft 1501 vertically extending at the inner opening of the frame portion 411. A gear 1502 is fixed to one end of the shaft 1501, and the gear 1502 meshes with a gear 1503 of the motor. According to the rotation of the motor, the flow conditioning plate 300 rotates and is displaced to the inclined position and the normal position. As illustrated in FIG. 14A, when the flow conditioning plate 300 is displaced to the inclined position, the flow conditioning plate 300 extends perpendicularly to the direction of the air flow (Z direction) and closes the inner opening of the frame portion 411. As illustrated in FIG. 15A, when the flow conditioning plate 300 is displaced to the normal position, the flow conditioning plate 300 extends parallel to the direction of the air flow (the Z direction) and opens the inner opening of the frame portion 411. The flow conditioning plate 300 of the second flow conditioning portion 132 is also displaced to the inclined position and the normal position by a similar mechanism.

The driving mechanism of the flow conditioning plate 300 is not limited to the above. For example, as illustrated in FIG. 15B, the flow conditioning plate 300 may have a structure in which two blades are connected by a hinge, and the two blades may be opened and closed according to the rotation of the motor. In this case, when the two blades are closed so as to be folded according to the rotation of the motor, the flow conditioning plate 300 extends parallel to the direction of the air flow (Z direction) as illustrated in FIG. 16B, and opens the inside of the frame portion 411. When the two blades are opened according to the rotation of the motor, as illustrated in FIG. 15A, the flow conditioning plate 300 extends perpendicularly to the direction of the air flow (Z direction) and closes the inner opening of the frame portion 411.

When the air supply mode is executed, the control device 900 displaces the flow conditioning plate 300 of the first flow conditioning portion 131 to the inclined position (see FIG. 14A) and displaces the flow conditioning plate 300 of the second flow conditioning portion 132 to the normal position (see FIG. 15A and FIG. 15B). In the first flow conditioning portion 131, since the high-velocity air flow ST1 flowing on the inner peripheral surface side of the pipe 140 passes through the opening portion 1400 having a small opening area, the flow velocity is likely to decrease. Since the low-velocity air flow ST3 flowing on the center side of the pipe 140 passes through the opening portion 1400 having a large opening area, the flow velocity is less likely to decrease.

Thus, the air flow passing through the flow conditioning plate 300 of the first flow conditioning portion 131 is diffused from the inner peripheral surface side to the central side of the pipe 140. The air flow having passed through the first flow conditioning portion 131 is supplied to the entire first surface 121 of the heat exchange element 120 at a substantially uniform wind velocity. In the second flow conditioning portion 132, since the flow conditioning plate 300 extends substantially parallel to the Z direction, a decrease in flow velocity of the air flow is suppressed.

When the air exhaust mode is executed, the control device 900 displaces the flow conditioning plate 300 of the first flow conditioning portion 131 to the normal position (see FIG. 15A and FIG. 15B) and displaces the flow conditioning plate 300 of the second flow conditioning portion 132 to the inclined position (see FIG. 14B). In the second flow conditioning portion 132, since the high-velocity air flow ST1 flowing on the center side of the pipe 140 passes through the opening portion 1400 having a small opening area, the flow velocity is likely to decrease. Since the low-velocity air flow ST3 flowing on the inner peripheral surface side of the pipe 140 passes through the opening portion 1400 having a large opening area, the flow velocity is unlikely to decrease.

According to this, the air flow passing through the flow conditioning plate 300 of the second flow conditioning portion 132 is diffused from the center side to the inner peripheral surface side of the pipe 140. The air flow that has passed through the second flow conditioning portion 132 is supplied to the entire second surface 122 of the heat exchange element 120 at a substantially uniform wind velocity. In the first flow conditioning portion 131, since the flow conditioning plate 300 extends substantially parallel to the Z direction, a decrease in flow velocity of the air flow is suppressed.

The number, shapes, formation method, and the like of the plurality of opening portions 1400 can adopt various aspects. For example, the plurality of opening portions 1400 may be constituted by a punching metal or may be formed in a mesh shape or a slit shape. FIG. 16 is a perspective view of a flow conditioning plate 300 according to a third modification. In the third modification, each of the plurality of opening portions 1400 extends in a semicircular arc shape about the axis O. Since the flow conditioning plate 300 illustrated in FIG. 16 is used for the first flow conditioning portion 131, the opening widths of the plurality of opening portions 1400 decrease as the distances thereof from the axis O increase. When the flow conditioning plate 300 is used in the second flow conditioning portion 132, the opening widths of the plurality of opening portions 1400 increase as the distances thereof from the axis O increase.

### Fifth Embodiment

As described above, in the heat exchange element 120, a large number of fine cells may be formed by using a heat storage base material of a thin metal sheet. In this case, while the heat exchange efficiency can be improved by increasing the surface area of the heat exchange element 120 (that is, the contact area with air), the thin heat storage base material may reduce the heat storage capacity.

Thus, in the heat exchanger 100 of a fifth embodiment, the flow conditioning plates 300 included in the pair of flow conditioning portions 130 are made of metal, and a latent heat storage material is attached to the flow conditioning plates 300. Thus, in addition to heat exchange by the heat storage base material of the heat exchange element 120, heat exchange can also be performed by the pair of flow conditioning portions 130, so that the entire heat storage capacity of the heat exchanger 100 can be increased. In addition, before the air flows into the heat exchange element 120, heat exchange can be performed in any one of the pair of flow conditioning portions 130, and thus the exchange efficiency of sensible heat and latent heat is improved.

The latent heat storage material is a material that stores, as thermal energy, latent heat to be exchanged with the outside during phase change or transition of a substance. Latent heat storage materials utilize heat of fusion and heat of solidification at melting points thereof. The latent heat storage materials undergo a solid-liquid phase change. Since the latent heat storage materials store heat at a phase change temperature, heat storage in a boundary region (that is, heat storage at a constant temperature) is possible. This principle is based on a phenomenon in which as long as two solid and liquid layers are mixed at the time of phase change, heat is continuously taken away from the outside, so that the temperature does not rise above the melting point. The melting point of the latent heat storage material to be used herein is 10 to 35°C, and preferably 20 to 35°C. When the melting point is within the range of 10 to 35°C, the latent heat storage material can effectively store heat when the heat exchanger 100 performs heat exchange between indoor air and outdoor air as a total heat exchanger.

Specific examples of the latent heat storage material include fatty acids such as palmitic acid and myristic acid, aromatic hydrocarbon compounds such as benzene and p-xylene, ester compounds such as isopropylpalmitate, butylstearate, stearylstearate, and myristylmyristate, alcohols such as stearylalcohol and glycerol, d-lactic acid, acetic acid, capric acid, and ethylenediamine. Examples of aliphatic hydrocarbons include paraffins. Examples of the paraffins include linear paraffins and branched paraffins, and linear n-paraffins are preferable. Examples of the n-paraffins include n-pentadecane, n-hexadecane, n-heptadecane, n-octadecane, and n-nonadecane. Examples of the hydrates include Zn(NO3)2·6H20, NaHPO4·12H20, Na2CO3·10H20, Na2SO4·10H20, Li2NO3·3H20, Ca2Cl2·6H20, Ca2CO3·10H20, and FeBr3·6H20. These latent heat storage components may be used alone or in combination of two or more kinds thereof. As the latent heat storage component, it is preferable to use a chemically and physically stable and inexpensive substance.

For example, when the n-paraffin is used as the latent heat storage material, since n-paraffins are hydrophobic, it is difficult to mix the n-paraffin with the latent heat storage material as the humidity control material that exchanges moisture and to support the mixture on the base material of the heat exchange element 120. According to the present embodiment, a water-based humidity control material is supported by the heat exchange element 120, and a hydrophobic latent heat storage material is supported by the flow conditioning plate 300 serving as the sensible heat exchange portion. Thus, in the heat exchanger 100, the water-based humidity control material and the hydrophobic latent heat storage material can be independently controlled and supported, and the production efficiency of the heat exchanger 100 is improved. The humidity control material and the latent heat storage material can be individually supported on the optimum base materials according to a difference between the surface hydrophilicities of the heat storage base materials.

When the hydrate salt is used as the latent heat storage material, there is a possibility that the latent heat storage material is affected by exchange of moisture of the humidity control component. According to the present embodiment, the hydrate salt and the humidity control component are not mixed with each other, and the latent heat storage material is continuously present on the heat storage base material in the flow conditioning plate 300 to perform total heat exchange, enabling each control.

A temperature control agent in which the latent heat storage material is held by a gel-like resin may be supported by the flow conditioning plate 300 serving as the sensible heat exchange portion. In this case, since the latent heat storage material undergoes a phase change in a gel state, the fluidity of the latent heat storage material is improved, and a larger heat storage capacity can be held in the flow conditioning plate 300. A temperature control agent in which the latent heat storage material is encapsulated in microcapsules may be supported by the sensible heat exchange portion. In this case, since the latent heat storage material undergoes a phase change in the microcapsules, the fluidity of the latent heat storage material is improved, and a larger heat storage capacity can be held in the flow conditioning plate 300.

### Remarks

The disclosure is not limited to each of the above-described embodiments. It is possible to make various modifications within the scope of the claims. An embodiment obtained by appropriately combining technical elements each disclosed in different embodiments falls also within the technical scope of the disclosure. Furthermore, technical elements disclosed in the respective embodiments may be combined to provide a new technical feature.

The number, shapes, and the like of the plurality of flow conditioning plates 300 in each flow conditioning portion 130 can adopt various aspects. For example, in the flow conditioning portion 130 of the first embodiment, a plurality of horizontal flow conditioning plates 321 may be arranged from the axis O toward both upper and lower sides, or a plurality of vertical flow conditioning plates 322 may be arranged from the axis O toward both left and right sides. In the flow conditioning portion 130 of the second modification, the plurality of flow conditioning plates 300 may be constituted by three or more curved plates (for example, four curved plates in the vertical and horizontal directions).

When the control device 900 displaces the plurality of flow conditioning plates 300 provided in each flow conditioning portion 130 to the inclined positions, the inclination angles of the respective flow conditioning plates 300 may be different from each other. For example, in the flow conditioning portion 130 in the air exhaust mode, the inclination angle of the flow conditioning plate 300 on the center side of the pipe 140 may be decreased, and the inclination angle of the flow conditioning plate 300 on the inner peripheral surface side of the pipe 140 may be increased.

## Claims

1. A heat exchanger comprising:
an axial flow fan configured to switch a direction of an air flow to an opposite side;
a heat exchange element aligned with the axial flow fan in the direction of the air flow;
a pair of flow conditioning portions provided on both sides of the heat exchange element in the direction of the air flow; and
a pipe having a tubular shape extending in the direction of the air flow, the pipe accommodating the axial flow fan, the heat exchange element, and the pair of flow conditioning portions,
wherein each of the pair of flow conditioning portions includes a flow conditioning plate configured to change an orientation, and is configured to condition the air flow according to the orientation of the flow conditioning plate.

2. The heat exchanger according to claim 1,
wherein each of the pair of flow conditioning portions changes the orientation of the flow conditioning plate in response to switching of the direction of the air flow at the axial flow fan.

3. The heat exchanger according to claim 2,
wherein the pair of flow conditioning portions includes, in the direction of the air flow, an upstream flow conditioning portion located on an upstream side of the heat exchange element and a downstream flow conditioning portion located on a downstream side of the heat exchange element, and
when the axial flow fan switches the direction of the air flow,
the upstream flow conditioning portion changes the orientation of the flow conditioning plate, and thus the flow conditioning plate diffuses a part of the air flow inward or outward in a radial direction of an axis of the axial flow fan, and
the downstream flow conditioning portion changes the orientation of the flow conditioning plate, and thus an area of the flow conditioning plate facing the air flow is reduced.

4. The heat exchanger according to claim 3,
wherein when the direction of the air flow is switched to a direction from the axial flow fan toward the heat exchange element, the upstream flow conditioning portion changes the orientation of the flow conditioning plate, and thus the flow conditioning plate approaches the axis toward the downstream side in the direction of the air flow and an angle formed between the flow conditioning plate and the axis is 45 degrees or less, and
when the direction of the air flow is switched to a direction from the heat exchange element toward the axial flow fan, the upstream flow conditioning portion changes the orientation of the flow conditioning plate, and thus the flow conditioning plate moves away from the axis toward the downstream side in the direction of the air flow and the angle formed between the flow conditioning plate and the axis is 45 degrees or less.

5. The heat exchanger according to claim 3,
wherein when the axial flow fan switches the direction of the air flow, the downstream flow conditioning portion changes the orientation of the flow conditioning plate, and thus the flow conditioning plate and the axis are parallel to each other.

6. The heat exchanger according to claim 1,
wherein the flow conditioning plate includes a slat extending outward in a radial direction from a rotation center line orthogonal to the direction of the air flow, and a fin erecting from a surface of the slat and extending in a direction crossing the rotation center line, and
the fin extends closer to the rotation center line or extends further away from the rotation center line toward a downstream side in the direction of the air flow.

7. The heat exchanger according to claim 1,
wherein the flow conditioning plate includes a plurality of opening portions each of which penetrates in a thickness direction, and
opening areas of the plurality of opening portions decrease or increase as distances of the plurality of opening portions increase from an axis of the axial flow fan.

8. The heat exchanger according to claim 1,
wherein the heat exchange element is a ventilation member formed by layering metal sheets and configured to cause air to be treated to flow along an inner surface of a cell, and
a humidity control material is attached to the inner surface of the cell.

9. The heat exchanger according to claim 8,
wherein the humidity control material includes a water-absorbent resin and a humidity control component impregnated in the water-absorbent resin.

10. The heat exchanger according to claim 9,
wherein the humidity control component is a deliquescent substance.

11. The heat exchanger according to claim 9,
wherein the humidity control component includes a carboxylate that forms a hydrate crystal and an additive that adjusts a crystallization threshold humidity.

12. The heat exchanger according to claim 1,
wherein the flow conditioning plate is made of a metal and is attached with a latent heat storage material.

13. A total heat exchange ventilation system comprising:
the heat exchanger according to any one of claims 1 to 12 in a space,
wherein the heat exchanger includes a first heat exchanger and a second heat exchanger, and
when the first heat exchanger performs air supply to the space, the second heat exchanger performs air exhaust from the space, and the air supply and the air exhaust are switched in conjunction with each other.
